(19) Europäisches Patentamt
European Patent Office
Office européen des brevets

(11) **EP 2 058 630 A1**

(12) **EUROPEAN PATENT APPLICATION**

(43) Date of publication:
**13.05.2009 Bulletin 2009/20**

(51) Int Cl.:
*G01D 5/347* (2006.01)   *G01D 5/38* (2006.01)

(21) Application number: **07380310.8**

(22) Date of filing: **12.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **FAGOR, S.COOP.**
**20500 Mondragon (Gipuzkoa) (ES)**

(72) Inventors:
• **Morlanes Calvo, Tomás**
  **01010 Victoria-Gasteiz(Alava) (ES)**
• **De la Peña Azarola, Jose Luis**
  **39005 Santander(Cantabria) (ES)**

(74) Representative: **Igartua, Ismael**
  **Apartado 213**
  **(Dpto. Propiedad Industrial)**
  **20500 Mondragon (Gipuzkoa) (ES)**

(54) **Readhead for an optoelectronic measuring device**

(57)  "Readhead for an optoelectronic measuring device, said device (1) comprising a graduated scale (3) and the readhead (2), and said readhead (2) being capable of being moved in relation to the graduated scale (3) in a direction of movement (X). The readhead (2) comprises a grating (20), a light emitter (22) for illuminating the graduated scale (3) through the grating (20) and an analyser (21) for receiving the light reflected on the graduated scale (3). The readhead (2) also comprises a polarising beam splitter (23) and a phase delay plate (24) that is disposed between said beam splitter (23) and said graduated scale (3), the light reflected on the graduated scale (3) reaching the analyser (21) after passing through said plate (24) and said beam splitter (23)."

Fig. 2

## Description

TECHNICAL FIELD

The present invention relates to readheads used in optoelectronic measuring devices.

PRIOR ART

Optoelectronic measuring devices that comprise a readhead and a graduated scale, in which the readhead may move in relation to the graduated scale in a direction of movement, are known, the relative position of said readhead in relation to said graduated scale in said direction of movement being capable of being determined.

Readheads of this type normally comprise at least one grating, a light emitter that emits a light beam in order to illuminate the graduated scale and an analyser that receives the light from said graduated scale. The light emitter illuminates the scale through the grating, a modulation of the light being obtained on the plane where the analyser is situated and by means of which the relative position of said readhead in relation to said graduated scale may be determined. In devices that operate by reflection the light beam emitted by said emitter generally incides on the graduated scale at a certain angle of inclination, the analyser being disposed in an optimal spatial position in relation to the graduated scale, in which it may receive the greater part of the light reflected on said graduated scale. The readhead is disposed at a certain distance of separation, on a plane perpendicular to the direction of movement, in relation to the graduated scale, and in the event that said distance of separation varies, the analyser moves from the optimal position, causing a reduction in the amount of light received by said analyser.

The document US 5861953 A discloses a device in which the light reflected on the graduated scale reaches the analyser after passing through a grating. With the aim of reducing the sensitivity of the device to possible changes in the distance of separation between the readhead and the graduated scale, different first and second optical lengths (optical paths) are foreseen for the light that is reflected on the graduated scale from the grating to the analyser. Thus, for a certain distance of separation the modulation of the reflected light that travels along the first optical path coincides with said analyser and not, therefore, the modulation of the reflected light that travels along the second optical path, whereas for another certain distance of separation modulation of the reflected light that travels along the second optical path coincides with said analyser and not, therefore, the modulation of the reflected light that travels along the first optical path. In this way, when the modulation of the reflected light coincides with the analyser for one of the two certain distances of separation, a maximum intensity can be achieved in said analyser for said two certain distances of separation rather than for only one certain distance of separation.

Document EP 0 484 104 A1 discloses a readhead that comprises at least one grating, a beam splitter, an analyser and a light emitter for illuminating the graduated scale, disposed in such a way that the light emitted by said emitter incides on the graduated scale perpendicularly to it, without the distance of separation between said readhead in relation to the graduated scale affecting the amount of light received by the analyser.

However, the light passes through said splitter both when it originates from the emitter and once it is reflected on the graduated scale, its intensity being reduced in both cases, the intensity of the light reaching the analyser once it has been reflected on said graduated scale being substantially smaller than that emitted by the emitter.

DISCLOSURE OF THE INVENTION

It is an object of this invention to provide a readhead that minimises the losses of intensity of the light in an optoelectronic measuring device that operates by reflection.

The readhead of the invention is used in optoelectronic measuring devices that also comprise a graduated scale, said readhead being capable of being moved in relation to said graduated scale in a longitudinal direction of movement. The readhead comprises at least one graduated grating, a light emitter for illuminating said graduated scale through said grating, and an analyser that occupies a different spatial position to the one occupied by the grating and which is adapted to receive a distribution of the modulated light that is obtained, in said spatial position, as a consequence of the passage of the light through the grating and its subsequent reflection on said graduated scale. As the readhead moves longitudinally in relation to the graduated scale, the distribution of the light that is obtained on the plane where the analyser is situated also moves, thereby enabling the relative position of said readhead in relation to said graduated scale in said direction of movement to be determined.

The readhead comprises a beam splitter situated on the path along which the light travels from the light emitter to the graduated scale and which is adapted so that the light incides on the graduated scale in a substantially perpendicular way, both the light originating from said emitter and the light reflected on said graduated scale passing through said splitter. Said splitter presents a polarising nature that enables the spatial separation of the two basic polarisation components of the light originating from the emitter (commonly known as polarisation S and polarisation P) and only one of said basic polarisation components to incide on said graduated scale.

The readhead also comprises a quarter-wave phase delay plate, which is disposed between the splitter and the graduated scale, so that said plate is passed through both by the light originating from the splitter and directed towards the graduated scale, and by the light reflected on said graduated scale and directed towards the beam splitter, the phase of the light being modified (and, therefore, the state of polarisation) every time it passes through said plate.

In this way, the light that reaches the beam splitter after being reflected on the graduated scale presents a basic state of polarisation S or P in contrast to that presented by the light when it emerges from said beam splitter and is directed towards the graduated scale, with all the reflected light therefore being directed towards a single spatial position, different to the spatial position where the light emitter is situated, where the analyser is disposed, thereby minimising the losses of intensity of the light emitted by the emitter.

These and other advantages and characteristics of the invention will be made evident in the light of the drawings and the detailed description thereof.

DESCRIPTION OF THE DRAWINGS

Figure 1 shows an embodiment of an optoelectronic measuring device.

Figure 2 shows a first embodiment of the readhead of the invention, the grating facing the light emitter.

Figure 3 shows the trajectory of the light received by the analyser, in the readhead of FIG. 2.

Figure 4 shows the first embodiment of the readhead of the invention, the grating facing the graduated scale.

Figure 5 shows a second embodiment of the readhead of the invention, the grating facing the light emitter.

Figure 6 shows the trajectory of the light received by the analyser, in the readhead of FIG. 4.

Figure 7 shows the second embodiment of the readhead of the invention, the grating facing the graduated scale.

DETAILED DISCLOSURE OF THE INVENTION

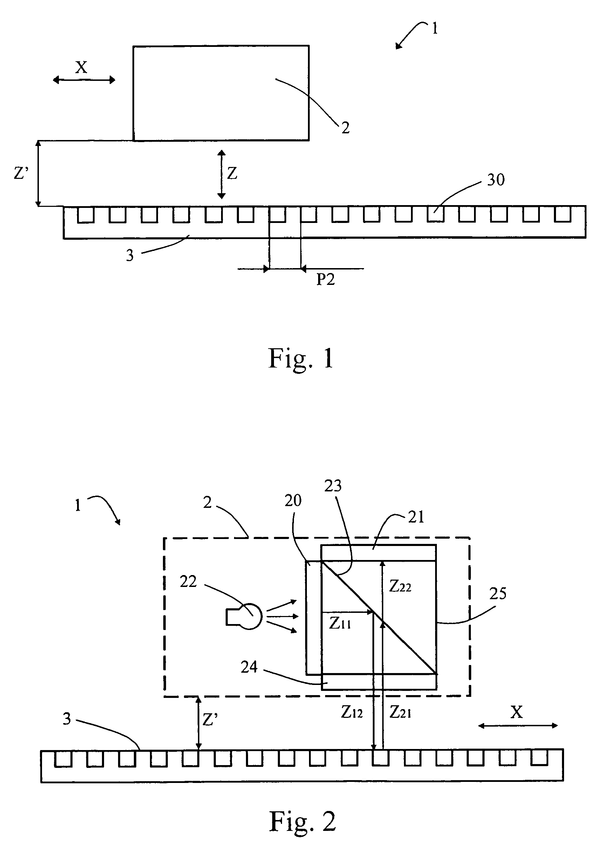

The readhead 2 of the invention is used in an optoelectronic measuring device 1 such as the one shown in the embodiment of Figure 1, the device 1 also comprising a graduated scale 3 in relation to which said readhead 2 may be moved in a longitudinal direction of movement X, in one or another direction, and said readhead 2 being disposed at a distance Z' in relation to said graduated scale 3 in a direction of separation Z perpendicular to the longitudinal direction of movement X of said readhead 2.

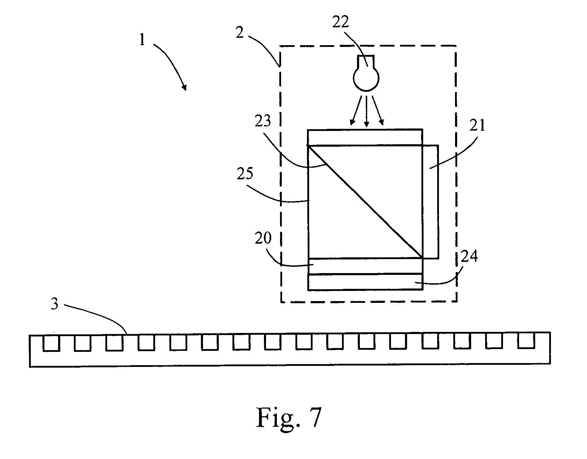

With reference to Figures 2 to 7, the readhead 2 comprises a graduated grating 20, preferably an amplitude grating, a light emitter 22 that illuminates the graduated scale 3 through said grating 20 and an analyser 21 that is disposed in a spatial position different to the spatial position that the grating 20 occupies and which is adapted to receive the light that is reflected on said graduated scale 3.

The grating 20 is a graduated reticule with a first period P1 and the graduated scale 3 comprises a plurality of marks 30 distributed all along the direction of movement X with a second period P2. As a result of the interaction of the light when it passes through the grating 20 and its subsequent reflection on the graduated scale 3, the light reflected on said graduated scale 3 presents a periodic modulation P3 with the following ratios being fulfilled:

$$\frac{m}{P2} = \frac{n}{P1} + \frac{1}{P3} \quad \text{(Equation 1)}$$

$$\frac{P1}{nZ1} = \frac{P3}{Z2} \quad \text{(Equation 2),}$$

where Z1 is the distance between the grating 20 and the graduated scale 3, Z2 is the distance between the graduated scale 3 and the analyser 21, and n and m are whole numbers other than zero. It is known that the contrast of the modulation of the reflected light is maximum (and, therefore, optimal) when the distance Z1 between the grating 20 and the graduated scale 3 corresponds to a whole number of a Talbot distance T of the system, this being defined as

$$T = \frac{P_1 P_2}{nm\lambda} \quad \text{(Equation 3),}$$

where λ is the wavelength of the light emitted by the emitter 22. The Talbot distance T corresponds with the Talbot effect widely known in the field of optics. As the readhead 2 moves longitudinally in relation to the graduated scale 3 in the direction of movement X, the distribution of the light reflected on the graduated scale 3 moves proportionally, the relative position of the readhead 2 in relation to said graduated scale 3 being capable of being determined from the interaction of said distribution of reflected light by means of the analyser 21.

The readhead 2 also comprises a beam splitter 23 of a polarising nature that is situated on the path that the light beam travels from the light emitter 22 to the graduated scale 3 and which enables the light to be separated spatially in accordance with the two basic states of linear polarisation (known as P and S, both states of polarisation being perpendicular to each other), said light beam emitted by the emitter 22 thus being divided into a first component A with basic polarisation P that is transmitted in the same direction as the incident beam (it passes through said beam splitter 23), and into a second component B with basic polarisation S that is reflected on said beam splitter 23 and which is transmitted in a direction perpendicular to the direction of said incident beam. Said beam splitter 23 is disposed in such a way in relation to the graduated scale 3 that one of said components A, B, containing only a basic state of polarisation P or S, incides in a substantially perpendicular manner on said graduated scale 3.

The readhead 2 also comprises a quarter-wave phase delay plate 24, at wavelength lambda ($\lambda/4$), which is preferably of glass (although it may also be of another material such as plastic) and which is disposed between the beam splitter 23 and the graduated scale 3, facing said graduated scale 3, in such a way that the component A or B of the light that incides in a substantially perpendicular manner on the graduated scale 3 passes through the plate 24 before reaching said graduated scale 3, and after being reflected on said graduated scale 3.

The plate 24 is oriented in such a way that after being passed through by one of the components A, B of the light beam originating from the beam splitter 23, said component A, B is directed towards the graduated scale 3 presenting a circular state of polarisation, the direction of rotation of which is univocally determined by the basic state of polarisation S or P that said component A, B presents before passing through said plate 24, said direction of rotation being reversed following reflection on the graduated scale 3, and said component A, B being directed towards the splitter 23 passing through the plate 24 again. When it passes through said plate 24 again, said component A, B presents a state of polarisation S or P again, said basic state of polarisation S or P being perpendicular to the state of polarisation that said component A, B presents when it is directed from the beam splitter 23 towards the plate 24. In other words, if a component A, B is directed towards the plate 24, before being reflected on the graduated scale 3, with a state of polarisation S, once it is reflected on said graduated scale 3 said component A, B comprises a state of polarisation P after passing through the plate 24 once more, and vice versa. In this way, the intensity of light reflected on the graduated scale 3 is directed to a single spatial position without substantial losses in intensity after passing through said plate 24 and said beam splitter 23, a spatial position where the analyser 21 is situated.

Preferably, the polarising beam splitter 23 is presented between two substantially equal prisms to form a cube 25 along with both prisms (although it may comprise a different geometrical shape, such as a parallelogram not shown in the figures), disposed in such a way that one of the faces of said cube 25 is facing the light emitter 22 while another of its faces is facing the graduated scale 3, as shown in Figures 2 to 7.

Preferably, the grating 20 is disposed on the face of the cube 25 facing the emitter 22 and in contact with said face, the plate 24 being disposed on the face facing the graduated scale 3 and in contact with said face. The analyser 21 is also disposed in contact with one of the faces of said cube 25 in a spatial position different to the grating 20 so that it may receive all the light reflected on the graduated scale 3. As shown in Figure 2, the distance Z1 between the grating 20 and the graduated scale 3 is obtained from the sum of a first course Z11 from said grating 20 to the beam splitter 23 and a second course Z12 from said beam splitter 23 to said graduated scale 3. The distance Z2 between the graduated scale 3 and the analyser 21 is obtained from the sum of a first course Z21 between the graduated scale 3 and the beam splitter 23, and a second course Z22 from the beam splitter 23 to the analyser 21, the courses Z12 and Z21 being common to any distance Z' between the readhead 2 and the graduated scale 3. Given that both the grating 20 and the analyser 21 are disposed on faces of the cube 25 and in contact with said faces, the courses Z11 and Z22 are the same by construction, as a result of which the distances Z1 and Z2 coincide regardless of the distance Z' between the readhead 2 and the graduated scale 3, thus ensuring that the analyser 21 remains in the optimal spatial position regardless of said distance Z'. Thus, the effect of the distance Z' between said readhead 2 and said graduated scale 3 in relation to the intensity of the light received by the analyser 21 is minimised or eliminated.

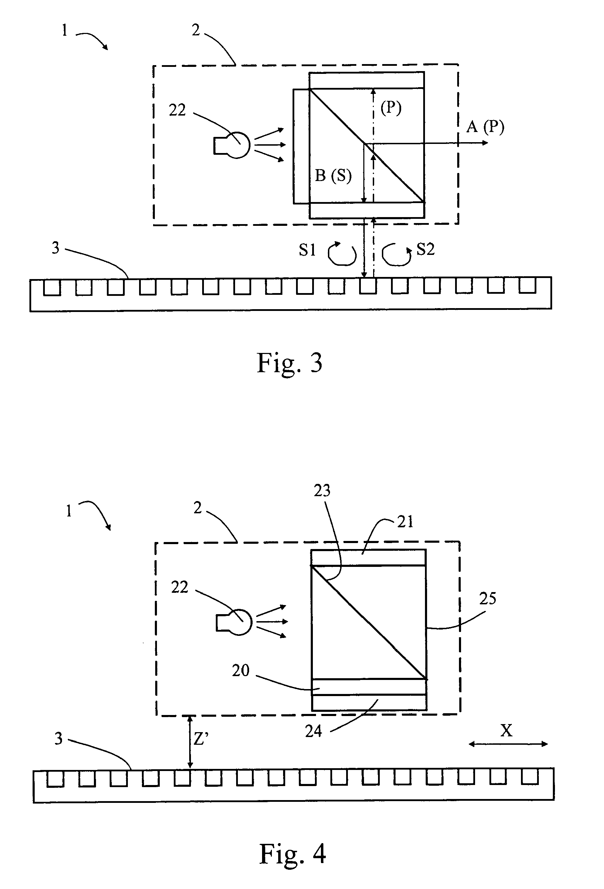

In a first embodiment shown in Figures 2 to 4, the light emitter 22 emits the light beam in a direction perpendicular to the direction of separation Z, and preferably parallel to the direction of movement X (although it may also be perpendicular both to the direction of separation Z and to the direction of movement X). The component B, with basic initial polarisation S, is that which after passing through the plate 24 incides perpendicularly on the graduated scale 3 with a circular polarisation whose direction of rotation S1 is reversed after being reflected on said graduated scale 3, reaching the beam splitter 23 with a basic polarisation P after passing through the plate 24 again, then reaching said beam splitter 23 in its entirety and moving towards the analyser 21. Figure 3 shows, in continuous lines, the components A and B until they reach the graduated scale 3 (component B) or passing through the cube 25 (component A), the component B being shown, in broken lines, after being reflected on said graduated scale 3, and the type of basic polarisation (P or S) also being shown in brackets.

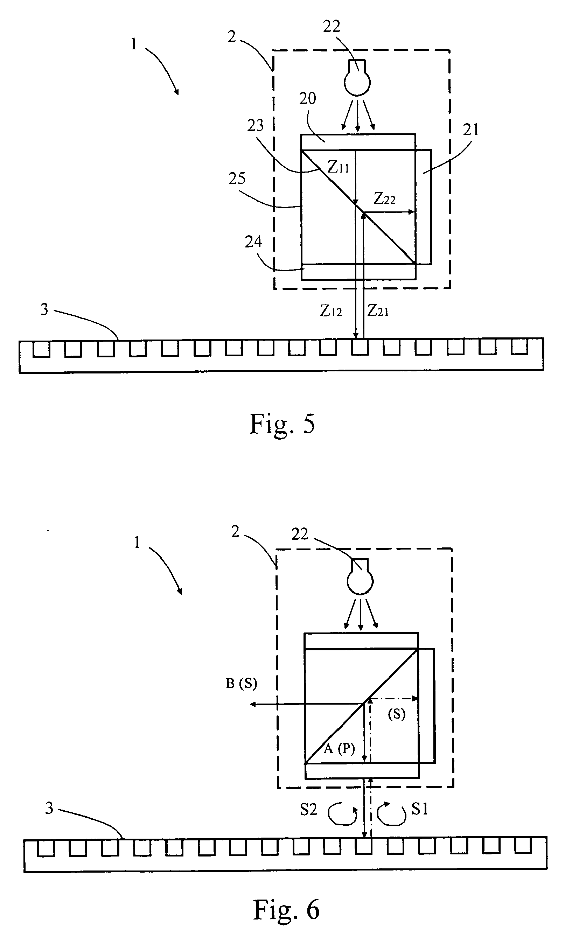

In a second embodiment shown in Figures 5 to 7, the light emitter 22 emits the light beam in a direction parallel to the direction of separation Z, and it is the component A with a basic polarity P which incides perpendicularly on the graduated scale 3, inciding on said graduated scale 3 with a circular polarisation in the second direction of rotation S2 after passing through the plate 24. After being reflected on said graduated scale 3, said second direction of rotation S2 is reversed, with rotation occurring in the first direction Slhe component A comprising a basic polarisation S when said component A passes through said plate 24 again eflected on said graduated scale 3. As it has a basic polarisation S, the component A is reflected on the splitter 23 and the analyser 21 is disposed in such a way that it receives practically all of said component A (practically all the intensity of the light that is reflected on the graduated scale 3). Figure 6 shows, in continuous lines, components A and B until they reach the graduated scale 3 (component A) or passing through the cube 25 (component B), the component A being shown, in broken lines, after being reflected on said graduated scale 3, and the type of polarisation (P or S) also being shown in brackets.

In both embodiments, the grating 20 may be disposed between the beam splitter 23 and the graduated scale 3, on the face of the cube 25 facing said graduated scale 3 and in contact with said face, the plate 24 preferably being disposed between said grating 20 and the graduated scale 3 and in contact with said grating 20, as shown in fgures 4 and 7. The analyser 21 is also in contact with one of the faces of said cube 25 in a different spatial position of the grating 20 so that it may receive all the light reflected on the graduated scale 3, although as the distances Z1 and Z2 do not coincide in this case, the analyser 21 is not always disposed in the optimal position regardless of the distance Z' between the readhead 2 and the graduated scale 3.

In both embodiments, the period P1 of the grating 20 is, for example, double the period P2 of the graduated scale 3, thus being obtained, according to equations 1 and 2, at a distance Z2 equal to Z1, a distribution of reflected light of a period P3 equal to the period P1 of the grating 20.

## Claims

1. Readhead for an optoelectronic measuring device, said device comprising (1) a graduated scale (3) and the readhead (2), said readhead (2) being capable of being moved in relation to the graduated scale (3) in a direction of movement (X) and said readhead (2) being disposed at a distance (Z') in relation to said graduated scale (3) in a direction of separation (Z) perpendicular to the direction of movement (X), the readhead (2) comprising at least one graduated grating (20), a light emitter (22) for illuminating said graduated scale (3) through the grating (20), and an analyser (21) for receiving the light reflected on the graduated scale (3) and which occupies a different spatial position to the position occupied by the grating (20), a periodic distribution of modulated light being generated on the plane where said analyser (21) is disposed as said readhead (2) moves in relation to said graduated scale (3) in the direction of movement (X), and the readhead (2) also comprising a beam splitter (23) on the path the light travels along from the emitter (22) to the graduated scale (3) to enable the light that illuminates the graduated scale (3) to incide on said graduated scale (3) in a substantially perpendicular manner, with both the light originating from said emitter (22) and the light reflected on said graduated scale (3) inciding on said beam splitter (23), **characterised in that** said beam splitter (23) is a polarising beam splitter, the readhead (2) also comprising a quarter lambda phase delay plate (24) that is disposed between said polarising beam splitter (23) and the graduated scale (3), facing said graduated scale (3), so that the light reflected on said graduated scale (3) reaches the analyser (21) after passing through said plate (24) and said beam splitter (23).

2. Readhead according to claim 1, wherein the plate (24) is oriented in such a way that the light that incides on the graduated scale (3) after passing through said plate (24) presents a circular state of polarisation.

3. Readhead according to any of the preceding claims, wherein the beam splitter (23) is presented between two substantially equal prisms to form a cube (25) along with both prisms, the cube (25) being disposed in such a way that one of its faces is facing the light emitter (22) while another of its faces is facing the plate (24).

4. Readhead according to any of claims 1 or 2, wherein the light beam splitter (23) is presented between two substantially equal prisms to form a parallelogram between both prisms, said parallelogram being disposed in such a way that one of its faces is facing the light emitter (22) while another of its faces is facing the plate (24).

5. Readhead according to any of claims 3 or 4, wherein the grating (20) is disposed in contact with the cube (25) or the parallelogram, on the face of said cube (25) or said parallelogram facing the light emitter (22).

6. Readhead according to any of claims 3 or 4, wherein the grating (20) is disposed in contact with the cube (25) or the parallelogram, on the face of said cube (25) or said parallelogram facing the plate (24).

7. Readhead according to any of claims 3 to 6, wherein the analyser (21) is disposed in contact with the cube (25) or the parallelogram in a spatial position other than the one occupied by the grating (20), on one of the faces of said cube (25) or said parallelogram, in such a way that it receives through the plate (24) and, said cube (25) or said parallelogram, the light that is reflected on the graduated scale (3).

8. Readhead according to any of the preceding claims, wherein the light emitter (22) emits the light beam in a direction perpendicular to the direction of separation (Z).

9. Readhead according to any of claims 1 to 7, wherein the light emitter (22) emits the light beam in a direction parallel to the direction of separation (Z).

10. Optoelectronic measuring device that comprises a readhead (2) according to any of the preceding claims.

Fig. 1

Fig. 2

Fig. 3

Fig. 4

Fig. 5

Fig. 6

Fig. 7

**European Patent Office**

## EUROPEAN SEARCH REPORT

Application Number

EP 07 38 0310

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2006 024179 A1 (SIEMENS AG [DE]) 4 January 2007 (2007-01-04) * figure 4 * * claims * * paragraphs [0061], [0062] * ----- | 1-10 | INV. G01D5/347 ADD. G01D5/38 |
| A | US 2003/067608 A1 (STEEGMULLER ULRICH [DE] STEEGMUELLER ULRICH [DE]) 10 April 2003 (2003-04-10) * figures 1-4 * * paragraphs [0034] - [0050] * ----- | 1-10 | |
| A | GB 2 187 282 A (CANON KK CANON KK [JP]) 3 September 1987 (1987-09-03) * figure 2 * * page 2, line 42 - page 3, line 40 * ----- | 1-10 | |

|  |  |
|---|---|
|  | TECHNICAL FIELDS SEARCHED (IPC) |
|  | G01D |

The present search report has been drawn up for all claims

| Place of search | Date of completion of the search | Examiner |
|---|---|---|
| The Hague | 7 May 2008 | Moulara, Guilhem |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                   EP 07 38 0310

This annex lists the patent family members relating to the patent documents cited in  the above-mentioned European search report.
The members are as contained in the European Patent Office EDP file on
The European Patent Office is in no way liable for these particulars which are merely given for the purpose of information.

07-05-2008

| Patent document cited in search report | Publication date | Patent family member(s) | Publication date |
|---|---|---|---|
| DE 102006024179 A1 | 04-01-2007 | CN 1873377 A | 06-12-2006 |
| US 2003067608 A1 | 10-04-2003 | DE 10147987 A1 | 17-04-2003 |
| GB 2187282 A | 03-09-1987 | DE 3706277 A1<br>US 5101102 A | 03-09-1987<br>31-03-1992 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5861953 A
- EP 0484104 A1